# EUROPEAN PATENT SPECIFICATION

(11) **EP 2 584 205 B1**
(45) Date of publication and mention of the grant of the patent: **07.10.2015**
(21) Application number: 11795603.7
(22) Date of filing: 07.06.2011
(51) Int. Cl.: F15B 13/02, F15B 13/042, F15B 21/10

(54) **TIME-DELAY VALVE**
ZEITVERZÖGERUNGSVENTIL
SOUPAPE DE TEMPORISATION

(30) Priority: 15.06.2010 JP 2010152475
(43) Date of publication of application: 24.04.2013
(73) Proprietor: Kosmek Ltd., Hyogo 651-2241 (JP)
(72) Inventor: ARISATO, Akira, Kobe-shi Hyogo 651-2241 (JP)
(74) Representative: Knights, Rupert
(86) International application number: PCT/JP2011/063005
(87) International publication number: WO 2011/158695

(56) References cited:
- FR-A1- 2 273 180
- JP-A- 59 144 802
- JP-A- 59 144 802
- JP-A- 2001 050 204
- US-A- 3 256 906

## Description

This invention relates to a time delay valve, and in particular, to a technique in which: a compressed fluid such as compressed air is accumulated in a pressurizing chamber via a throttle valve; and an on-off valve is opened when a pressure in the pressurizing chamber reaches a set pressure.

Such a time delay valve is described in Japanese Examined Utility Model Publication No. 40229/1972. In that valve a valve case is attached to a housing containing a throttle-type delay mechanism, and in the valve case, an output valve is provided between a supply port and an output port of compressed air. The delay mechanism is structured so that, when pilot compressed air is applied to a pressure-receiving surface of a piston via a throttle valve and a pressurizing chamber and the pressure in the pressurizing chamber reaches a set pressure, the piston is lowered. The thus lowered piston opens the output valve.

In the above mentioned valve, in addition to the supply port and the output port for the compressed air, a supply port and a supply passage for the pilot compressed air are also required, which makes its circuit complicated, leading to an increase in the size of the time delay valve.

Further prior art valves are known from US 3256906, FR 2273180 and JP 59144802.

An object of the present invention is to provide a small-sized time delay valve having a simple circuit.

The invention is defined in the independent claim 1.

### Brief description of the drawings

FIG. 1A is a circuit diagram of a time delay valve.
FIG. 1B is a sectional view in elevation of the time delay valve.
FIG. 2A is a view similar to FIG. 1A, showing a first exemplary variation. FIG. 2B is a view similar to FIG. 1A, showing a second exemplary variation. FIG. 2C is a view similar to FIG. 1A, showing a third exemplary variation.

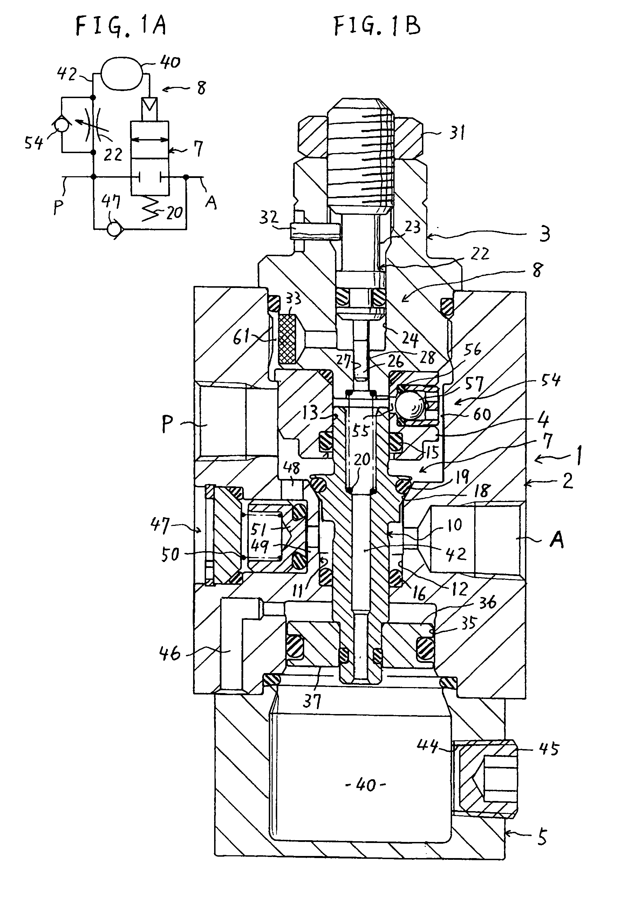

In order to achieve the above object, for example as shown in FIG. 1A and FIG. 1 B, the present invention structures a time delay valve as follows.

In a casing 1, there are provided: an on-off valve 7 which opens/closes flow between a first port P where a compressed fluid is supplied and a second port A connected to an outside of the casing 1; and a delay mechanism 8 which opens the on-off valve 7 after a predetermined period of time has elapsed from a start of supply of the compressed fluid to the first port P. The on-off valve 7 includes a valve seat 18 provided in the casing 1, an on-off member 10 having a valve portion 19 sealed to the valve seat 18, and an elastic member 20 urging the on-off member 10 toward the valve seat 18. The delay mechanism 8 includes a throttle valve 22 communicatively connected to the first port P, a piston 36 movably inserted into a cylinder hole 35 and connected to the on-off member 10, a pressurizing chamber 40 communicatively connected to a pressure-receiving surface 37 of the piston 36, and a communicating passage 42 communicatively connecting a throttle passage 28 of the throttle valve 22 to the pressurizing chamber 40. A valve opening force exerted on the piston 36 when a pressure of the compressed fluid supplied from the first port P to the pressurizing chamber 40 through the throttle passage 28 and the communicating passage 42 reaches a set pressure is designed to be larger than a resultant force of (i) a valve closing force exerted on the on-off member 10 by the compressed fluid from the first port P and (ii) an urging force by the elastic member 20.

The present invention provides following functions and effects.

When a compressed fluid is supplied to the first port, the compressed fluid passes through the throttle passage of the throttle valve and the communicating passage, and is gradually accumulated in the pressurizing chamber. In this initial state, a resultant force of (i) a force in a closing direction provided by a pressure at the first port and (ii) the urging force by the elastic member is applied, as a valve closing force, to the valve portion of the on-off member. Since this valve closing force is larger than the valve opening force applied to the piston by the pressurizing chamber having a low pressure, the on-off member is kept closed.

Then, when the pressure of the compressed fluid supplied to the pressurizing chamber reaches the set pressure after the time has elapsed from the start of supply of the compressed fluid to the first port, the valve opening force exerted on the piston exceeds the valve closing force. As a result, the valve portion of the on-off member is separated from the valve seat, and therefore the compressed fluid from the first port is supplied to the outside through a gap created by the separated valve portion and through the second port.

As described above, in the present invention, the on-off member is opened using the compressed fluid from the first port, and therefore, differently from the above conventional art, the supply port and the supply passage for the pilot compressed air are not needed, which allows the circuit of the compressed fluid to be simple, leading to a downsizing of the time delay valve.

In the present invention, it is preferable that the communicating passage 42 is at least partially provided inside the on-off member 10.

In this case, the internal space of the on-off member is effectively used as the communicating passage, and this eliminates a need for providing an exclusive pipe or passage for communicative connection, leading to a further downsizing of the time delay valve.

Further, it is preferable that the following features are added to the present invention.

The time delay valve is configured so that: the compressed fluid is suppliable and dischargeable through the first port P; and a fluid pressure actuator is connectable to the second port A. Further, in the casing 1, a check valve 47 which allows flow from the second port A to the first port P and prevents backflow is connected in parallel with the on-off valve 7.

In the above structure, when the compressed fluid in an actuation chamber of the fluid pressure actuator is discharged, it is only necessary to switch the first port to a discharge state. Then, the compressed fluid from the second port is rapidly discharged to the outside through the check valve and the first port. This enables the fluid pressure actuator to be returned to its original state promptly.

Further, in the present invention, it is preferable that another check valve 54 which allows flow from the pressurizing chamber 40 to the first port P and prevents backflow is connected in parallel with the throttle valve 22.

In this case, when the pressurizing chamber is depressurized, the compressed fluid in the pressurizing chamber is rapidly discharged to the outside through the communicating passage, the other check valve, and the first port, and therefore, the pressurizing chamber is depressurized promptly.

Further, in the present invention, it is preferable that an installation hole 11 for the on-off member 10, the cylinder hole 35, and the pressurizing chamber 40 are sequentially arranged in series.

In this case, the lateral size of the casing is decreased, and the time delay valve can be made thinner.

Furthermore, in the present invention, it is preferable that an installation hole 24 for a throttle member 23 of the throttle valve 22, an installation hole 11 for the on-off member 10, the cylinder hole 35, and the pressurizing chamber 40 are sequentially arranged in series.

In this case, the lateral size of the casing is further decreased, and the time delay valve is made further thinner.

Hereinafter, one embodiment of the present invention will be described with reference to the circuit diagram of FIG. 1A and the sectional view of FIG. 1B.

A casing 1 of a time delay valve includes: a middle case 2; an upper case 3 screwed to an upper portion of the middle case 2; a guide cylinder 4 fixed to the middle case 2 by the upper case 3; and a lower case 5 fixed to a lower portion of the middle case 2 by a plurality of bolts (not shown).

A first port P through which compressed air serving as a compressed fluid is supplied and discharged is opened in an upper left portion of the middle case 2. Further, a second port A which is connected to a pneumatic cylinder (not shown) is opened in a lower right portion of the middle case 2.

In the casing 1, there are provided: an on-off valve 7 which opens/closes flow between the first port P and the second port A; and a delay mechanism 8 which opens the on-off valve 7 after a predetermined period of time has elapsed from the start of supply of compressed air to the first port P.

The on-off valve 7 has an on-off member 10 extending in a vertical direction, and is structured as follows.

An installation hole 11 for the on-off member 10 is constituted of: a lower hole 12 formed in a middle portion of the middle case 2; and an upper hole 13 formed in the guide cylinder 4. An upper portion of the on-off member 10 is hermetically inserted into the upper hole 13 via an upper sealing member 15, while a lower portion of the on-off member 10 is hermetically inserted into the lower hole 12 via a lower sealing member 16. A tapered valve seat 18 is formed at an upper end portion of the lower hole 12, and a valve portion 19 (an O-ring 19 in this embodiment) provided at a vertically middle portion of the on-off member 10 is configured to come into contact with the valve seat 18 from above. Further, the on-off member 10 is urged by an elastic member 20 constituted by a spring, toward the valve seat 18.

Next, the delay mechanism 8 will be described.

A throttle valve 22 communicatively connected to the first port P is arranged in the upper case 3. The throttle valve 22 has a throttle member 23 extending in the vertical direction, and is structured as follows.

An installation hole 24 for the throttle member 23 is formed in the upper case 3, and the throttle member 23 is hermetically screwed in the installation hole 24 so as to be advanceable and retreatable in the vertical direction. A tapered throttle portion 26 provided at a lower portion of the throttle member 23 is fitted into a throttle hole 27. A fitting gap between the throttle portion 26 and the throttle hole 27 constitutes a throttle passage 28.

Note that, reference numeral 31 represents a lock nut, reference numeral 32 represents a stopper pin, and reference numeral 33 represents a filter.

A cylinder hole 35 having a larger diameter than that of a sealed portion of the valve seat 18 is formed in the lower portion of the middle case 2, and a piston 36 is hermetically inserted into the cylinder hole 35 so as to be movable in the vertical direction. The piston 36 is connected to the lower portion of the on-off member 10, and the piston 36 functions to push the on-off member 10 in an opening direction (upwardly).

In the lower case 5, a pressurizing chamber 40 communicatively connected to a pressure-receiving surface 37 of the piston 36 is formed. A communicating passage 42 is formed in the on-off member 10 so as to communicatively connect the pressurizing chamber 40 to the throttle passage 28 of the throttle valve 22. The elastic member 20 is installed in an upper portion of the communicating passage 42.

With the above structure, the installation hole 24 for the throttle member 23, the installation hole 11 for the on-off member 10, the cylinder hole 35, and the pressurizing chamber 40 are sequentially arranged in series.

Further, a plug 45 is installed in an internal threaded hole 44 formed in a peripheral wall of the pressurizing chamber 40. When it is desired to increase the capacity of the pressurizing chamber 40, this is realized by detaching the plug 45, and attaching an additional tank, a pipe for increasing the capacity, or the like (any of them are not shown), to the internal threaded hole 44.

Meanwhile, a space above the piston 36 is communicatively connected to outside air via a breathing passage 46.

Further, a check valve 47 which allows flow from the second port A to the first port P and prevents backflow is provided in the middle case 2, and the check valve 47 is connected in parallel with the on-off valve 7, on an outer peripheral side of the on-off valve 7. The check valve 47 includes: a first bypass passage 48 which bypasses the valve seat 18 of the on-off valve 7; a check valve seat 49 provided at a midway portion of the first bypass passage 48; and a check member 51 which is brought into contact with the check valve seat 49 by a spring 50.

Further, another check valve 54 which allows flow from the pressurizing chamber 40 to the first port P and prevents backflow is provided to the guide cylinder 4, and the other check valve 54 is connected in parallel with the throttle valve 22. The other check valve 54 includes: a second bypass passage 55 which bypasses the throttle passage 28; a check valve seat 56 provided at a midway portion of the second bypass passage 55; and a check ball 57 which is brought into contact with the check valve seat 56.

The time delay valve operates as follows.

In a state of FIG. 1A and FIG. 1B, compressed air in the first port P has been discharged to the outside, the on-off member 10 of the on-off valve 7 is lowered by the elastic member 20, and the valve portion 19 of the on-off valve 7 is seal-contacted to the valve seat 18.

When compressed air is supplied to the first port P, the compressed air passes through a lower passage 60 formed on an outer peripheral side of the guide cylinder 4, an upper passage 61 formed on an outer peripheral side of the filter 33, the filter 33, the throttle passage 28 of the throttle valve 22, and the communicating passage 42 in the on-off member 10, and then the compressed air is gradually accumulated in the pressurizing chamber 40. In this initial state, due to a pressure at the first port P, a resultant force of (i) a downward force corresponding to a pressure exerted on an annular cross sectional area obtained by subtracting a cross sectional area sealed by the upper sealing member 15 from a cross sectional area sealed by the valve portion 19 and (ii) a downward urging force by the elastic member 20 is applied to the on-off member 10 as a valve closing force. Since the valve closing force is larger than a valve opening force provided to the piston 36 by a low pressure in the pressurizing chamber 40, the on-off member 10 is kept closed.

Meanwhile, due to the pressure at the first port P, the check valve 47 is closed and the other check valve 54 is also closed.

Then, when the pressure of the compressed air having supplied to the pressurizing chamber 40 reaches a set pressure after a predetermined period of time has elapsed from the start of supply of the compressed air to the first port P, the upward valve opening force exerted on the piston 36 exceeds the downward valve closing force. As a result, the on-off member 10 is raised and the valve portion 19 is separated from the valve seat 18, and therefore the compressed air from the first port P is supplied to an actuation chamber (not shown) of the pneumatic cylinder through a gap created by the separated valve portion 19, the lower hole 12, and the second port A.

When it is desired to discharge the compressed air from the actuation chamber (not shown) of the pneumatic cylinder, it is only necessary to switch the first port P to a discharge state. Then, the compressed air in the second port A is rapidly discharged to the outside through the lower hole 12, the check valve 47, the first bypass passage 48, and the first port P. At the same time, the compressed air in the pressurizing chamber 40 is rapidly discharged to the outside through the communicating passage 42 in the on-off member 10, the other check valve 54, the lower passage 60, and the first port P.

The apparatus of the above-described embodiment has following advantages.

Since the installation hole 24 for the throttle member 23 of the throttle valve 22, the installation hole 11 for the on-off member 10, the cylinder hole 35, and the pressurizing chamber 40 are sequentially arranged in series, the lateral size of the casing 1 is decreased and the time delay valve can be made thinner. Further, since the throttle passage 28 of the throttle valve 22 and the pressurizing chamber 40 are communicatively connected to each other by the communicating passage 42 in the on-off member 10, it is not necessary to provide an exclusive pipe or passage for communicative connection, and this makes the casing 1 more compact.

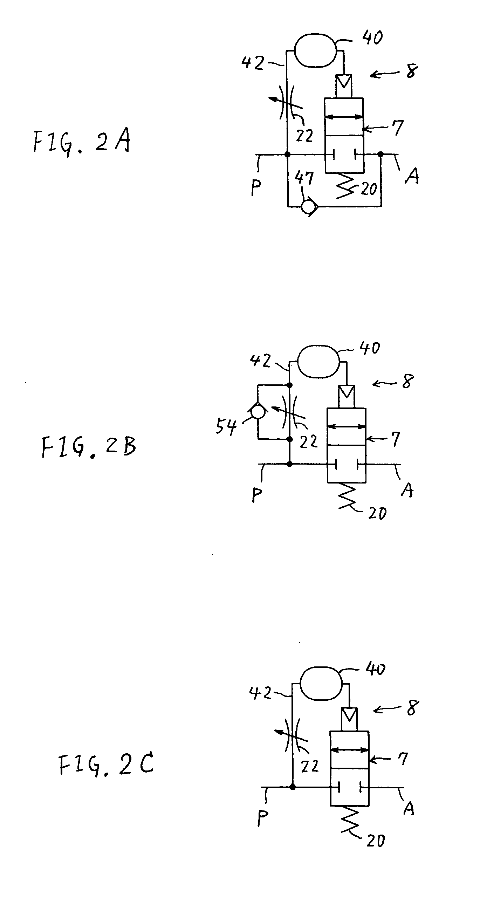

FIG. 2A to FIG. 2C respectively show a first exemplary variation to a third exemplary variation of the present invention, and each of them is a view similar to FIG.1A.

In the first exemplary variation of FIG. 2A, the other check valve 54 in FIG. 1A is omitted. In this case, turning to FIG. 2A (and FIG. 1B), when the first port P is switched to the discharge state, compressed air in the pressurizing chamber 40 is gradually discharged to the outside through the throttle passage 28 of the throttle valve 22, the filter 33, the upper passage 61, the lower passage 60, and the first port P.

In the second exemplary variation of FIG. 2B, the check valve 47 in FIG. 1A is omitted. In addition, the second port A is connected to an ejection nozzle, for example, instead of being connected to the pneumatic cylinder. In this case, compressed air supplied to the first port P is discharged from the ejection nozzle to the outside through the second port A after a predetermined period of time has elapsed.

As shown in the third exemplary variation of FIG. 2C, the two check valves, which are the check valve 47 and the other check valve 54 in FIG. 1A, may be omitted.

The above-described embodiment and exemplary variations can be modified as follows.

It is possible to arrange the throttle valve 22 so as to be in a horizontal position in the upper portion of the middle case 2.

The guide cylinder 4 and the upper case 3 may be formed integrally with each other.

The compressed fluid may be any other type of fluid instead of compressed air.

## Claims

1. A time delay valve comprising: an on-off valve (7) which is provided in a casing (1) and opens/closes flow between a first port (P) where a compressed fluid is supplied and a second port (A) connected to an outside of the casing (1); and a delay mechanism (8) which is provided in the casing (1) and opens the on-off valve (7) after a predetermined period of time has elapsed from a start of supply of the compressed fluid to the first port (P), wherein:
the on-off valve (7) includes a valve seat (18) provided in the casing (1), an on-off member (10) having a valve portion (19) sealed to the valve seat (18), and an elastic member (20) urging the on-off member (10) toward the valve seat (18);
the delay mechanism (8) includes a throttle valve (22) communicatively connected to the first port (P), a piston (36) movably inserted into a cylinder hole (35) and connected to the on-off member (10), a pressurizing chamber (40) communicatively connected to a pressure-receiving surface (37) of the piston (36), and a communicating passage (42) communicatively connecting a throttle passage (28) of the throttle valve (22) to the pressurizing chamber (40); and
a valve opening force exerted on the piston (36) when a pressure of the compressed fluid supplied from the first port (P) to the pressurizing chamber (40) through the throttle passage (28) and the communicating passage (42) reaches a set pressure is designed to be larger than a resultant force of (i) a valve closing force exerted on the on-off member (10) by the compressed fluid from the first port (P) and (ii) an urging force by the elastic member (20),
**characterized in that** the communicating passage (42) is formed in the on-off member (10).

2. A time delay valve according to Claim 1, wherein:
the time delay valve is configured so that the compressed fluid is suppliable and dischargeable through the first port (P) and so that a fluid pressure actuator is connectable to the second port (A); and
in the casing (1), a check valve (47) which allows flow from the second port (A) to the first port (P) and prevents backflow is connected in parallel with the on-off valve (7).

3. The time delay valve according to Claim 1 or 2, wherein
another check valve (54) which allows flow from the pressurizing chamber (40) to the first port (P) and prevents backflow is connected in parallel with the throttle valve (22).

4. The time delay valve according to Claim 1 or 2, wherein
an installation hole (11) for the on-off member (10), the cylinder hole (35), and the pressurizing chamber (40) are sequentially arranged in series.

5. The time delay valve according to Claim 1 or 2, wherein
an installation hole (24) for a throttle member (23) of the throttle valve (22), an installation hole (11) for the on-off member (10), the cylinder hole (35), and the pressurizing chamber (40) are sequentially arranged in series.

## Patentansprüche

1. Zeitverzögerungsventil, umfassend: ein Schaltventil (7), das in einem Gehäuse (1) vorgesehen ist, und den Strom zwischen einer ersten Öffnung (P), wo ein Druckfluid zugeführt wird, und einer zweiten Öffnung (A) zu einem Raum außerhalb des Gehäuses (1) öffnet/schließt; und einen Verzögerungsmechanismus (8), der im Gehäuse (1) vorgesehen ist und das Schaltventil (7) nach Ablauf einer festgelegten Zeitspanne ab einem Beginn der Zuführung des Druckfluids zur ersten Öffnung (P) öffnet, wobei:
das Schaltventil (7) einen Ventilsitz (18) beinhaltet, der im Gehäuse (1) vorgesehen ist, ein Schaltelement (10) mit einem Ventilabschnitt (19), das gegenüber dem Ventilsitz (18) abgedichtet ist, und ein elastisches Element (20), das das Schaltelement (10) zum Ventilsitz (18) treibt;
der Verzögerungsmechanismus (8) ein Drosselventil (22) beinhaltet, das kommunikativ mit der ersten Öffnung (P) verbunden ist, einen Kolben (36), der beweglich in ein Zylinderloch (35) eingesetzt und mit dem Schaltelement (10) verbunden ist, eine Druckkammer (40), die kommunikativ mit einer druckempfangenden Oberfläche (37) des Kolbens (36) verbunden ist, und ein Kommunikationsabschnitt (42), der einen Drosselabschnitt (28) des Drosselventils (22) mit der Druckkammer (40) kommunikativ verbindet; und
eine Ventilöffnungskraft, die auf den Kolben (36) ausgeübt wird, wenn ein Druck des Druckfluids, das von der ersten Öffnung (P) durch den Drosselabschnitt (28) und den Kommunikationsabschnitt (42) der Druckkammer (40) zugeführt wird, einen vorgegebenen Druck erreicht, so ausgelegt ist, dass sie größer ist als eine resultierende Kraft aus (i) einer Ventilschließkraft, die vom Druckfluid von der ersten Öffnung (P) auf das Schaltelement (10) ausgeübt wird, und (ii) einer Treibkraft des elastischen Elements (20),
**dadurch gekennzeichnet, dass** der Kommunikationsabschnitt (42) im Schaltelement (10) gebildet wird.

2. Zeitverzögerungsventil gemäß Anspruch1, wobei:
das Zeitverzögerungsventil so konfiguriert ist, dass das Druckfluid durch die erste Öffnung (P) zugeführt und abgeführt werden kann und dass ein Fluiddruckaktor mit der zweiten Öffnung (A) verbunden werden kann; und
im Gehäuse (1) ein Rückschlagventil (47), das einen Strom von der zweiten Öffnung (A) zur ersten Öffnung (P) zulässt und einen Rückstrom verhindert, parallel zum Schaltventil (7) angeschlossen ist.

3. Zeitverzögerungsventil gemäß Anspruch1 oder 2, wobei ein weiteres Rückschlagventil (54), das einen Strom von der Druckkammer (40) zur ersten Öffnung (P) zulässt und einen Rückstrom verhindert, parallel zum Drosselventil (22) angeschlossen ist.

4. Zeitverzögerungsventil gemäß Anspruch1 oder 2, wobei ein Installationsloch (11) für das Schaltelement (10), das Zylinderloch (35) und die Druckkammer (40) hintereinander aufeinanderfolgend angeordnet sind.

5. Zeitverzögerungsventil gemäß Anspruch 1 oder 2, wobei ein Installationsloch (24) für ein Drosselelement (23) des Drosselventils (22), ein Installationsloch (11) für das Schaltelement (10) das Zylinderloch (35) und die Druckkammer (40) hintereinander aufeinanderfolgend angeordnet sind.

## Revendications

1. Une vanne à temporisateur, comprenant : une vanne ouverte-fermée (7) placée dans un boîtier (1) et ouvrant/fermant un débit entre un premier orifice (P) par lequel un fluide comprimé est amené, et un deuxième orifice (A) relié à une partie extérieure du boîtier (1) ; et un mécanisme de temporisation (8) contenu dans le boîtier (1) et ouvrant la vanne ouverte-fermée (7) après l'expiration d'une période prédéterminée depuis le commencement de la fourniture du fluide comprimé au premier orifice (P),
la vanne ouverte-fermée (7) comprenant un siège (18) pratiqué dans le boîtier (1), un élément de marche/arrêt (10) avec une partie de vanne (19) fixée hermétiquement sur le siège de la vanne (18), et un élément élastique (20) sollicitant l'élément de marche/arrêt (10) en direction du siège de la vanne (18) ;
le mécanisme de temporisation (8) comprenant une soupape d'étranglement (22) raccordée et communiquant avec le premier orifice (P), un piston (36) inséré de façon mobile dans un orifice à cylindre (35), et raccordé à l'élément de marche/arrêt (10), une chambre de pressurisation (40), raccordée et communiquant avec une surface réceptrice de la pression (37) du piston (36), et un passage de communication (42) raccordé et communiquant avec un passage d'étranglement (28) de la soupape d'étranglement (22) de la chambre de pressurisation (40) ; et
une force d'ouverture de la vanne exercée sur le piston (36), lorsqu'une pression de fluide comprimé amenée du premier orifice (P) à la chambre de pressurisation (40), à travers le passage d'étranglement (28) et le passage de communication (42), atteint une pression établie, étant étudiée pour être plus élevée qu'une force résultante (i) d'une force de fermeture de la vanne exercée sur l'élément de marche/arrêt (10) par le fluide comprimé provenant du premier orifice (P), et (ii) d'une force de sollicitation exercée par l'élément élastique (20),
**caractérisée en ce que** le passage de communication (42) est pratiqué dans l'élément de marche/arrêt (10).

2. Une vanne à temporisateur selon la revendication 1, dans laquelle :
la vanne à temporisateur est configurée de sorte que le fluide comprimé puisse être fourni et refoulé par le premier orifice (P), et qu'un mécanisme de commande de pression de fluide puisse être raccordé au deuxième orifice (A) ; et
dans le boîtier (1), un clapet de retenue (47), permettant l'écoulement du deuxième orifice (A) au premier orifice (P), et empêchant le débit à contre-courant, est monté en parallèle avec la vanne ouverte-fermée (7).

3. La vanne à temporisateur selon la revendication 1 ou 2, dans laquelle un autre clapet de retenue (54), permettant l'écoulement de la chambre de pressurisation (40) au premier orifice (P), et empêchant le débit à contre-courant, est monté en parallèle avec la soupape d'étranglement (22).

4. La vanne à temporisateur selon la revendication 1 ou 2, dans laquelle un orifice d'installation (11) pour l'élément de marche/arrêt (10), l'orifice à cylindre (35), et la chambre de pressurisation (40), sont disposés en série dans un ordre séquentiel.

5. La vanne à temporisateur selon la revendication 1 ou 2, dans laquelle un orifice d'installation (24) pour un élément d'étranglement (23) de la soupape d'étranglement (22), un orifice d'installation (11) pour l'élément de marche/arrêt (10), l'orifice à cylindre (35), et la chambre de pressurisation (40), sont disposés en série dans un ordre séquentiel.
